# EUROPEAN PATENT APPLICATION

(11) **EP 3 190 080 A1**
(43) Date of publication of application: **12.07.2017**
(21) Application number: 16150584.7
(22) Date of filing: 08.01.2016
(51) Int. Cl.: B66B 19/00, B66B 7/02

(54) **MANUFACTURING AN ELEVATOR GUIDE RAIL**

(71) Applicant: Kone Corporation, 00330 Helsinki (FI)
(72) Inventor: Kulo, Eetu, 00330 Helsinki (FI); Piitulainen, Henry, 00330 Helsinki (FI); Hänninen, Ari, 00330 Helsinki (FI); Kere, Petri, 00330 Helsinki (FI); Kuusi, Sakari, 00330 Helsinki (FI); Vidim, Jakub, 00330 Helsinki (FI)
(74) Representative: Kolster Oy Ab

(57) **Abstract**

A 3D-printer is positioned in an elevator shaft such that the 3D-printer is movable in a hoisting direction of the elevator car. An elevator guide rail is printed to a wall of the elevator shaft by: printing an elevator guide rail profile by the 3D-printer at a current position of the 3D-printer, and moving the 3D-printer to a next position after the elevator guide rail profile is printed at the current position.

## Description

### FIELD OF THE INVENTION

The present invention relates to elevator guide rails and particularly to manufacturing of elevator guide rails.

### BACKGROUND OF THE INVENTION

Conventionally total weight of the elevator guide rail is taken into account when calculating tension during safety gear operation. With current full metal guide rail difficulties arise when elevator travel exceeds 250 meters. The mass of the guide rail becomes so large that it creates large amounts of tension, which leads to decreasing bracket distances. With the decreasing bracket distances the number of brackets used to suspend the guide rail to its position is increased. This leads to high material and installation costs. In addition, guide rails with large dimensions are not possible to use as this would further increase the mass of the guide rail. In worst cases, the bracket distance in the guide rail is fixed whereby the rigidity of the guide rail cannot be improved by decreasing the bracket distance and the guide rail cannot be used for high-rise elevators.

Typical elevator guide rails are 5 meter long, which make them difficult to handle with manpower and challenging for on-site storage and logistics. Due to the weight and length of the guide rails, lifting the guide rails pose a safety hazard to the nearby personnel.

### BRIEF DESCRIPTION OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

An object of the present invention is thus to provide a method and an apparatus, computer program and computer program product for implementing the method so as to solve at least some of the above disadvantages. The objects of the invention are achieved by a method, a 3D-printer, a computer program and a computer program product which are characterized by what is stated in the independent claims. The preferred embodiments of the invention are disclosed in the dependent claims.

Some embodiments provide manufacturing of elevator guide rail in an elevator shaft.

### BRIEF DESCRIPTION OF THE DRAWINGS

In the following the invention will be described in greater detail by means of preferred embodiments with reference to the attached drawings, in which
Figure 1 is an example of an elevator arrangement according to an embodiment;
Figure 2 is an example of a 3D-printer for an elevator guide rail according to an embodiment;
Figures 3a and 3b illustrate examples of molds according to embodiments;
Figure 4 illustrates an example of method for manufacturing an elevator guide rail inside an elevator shaft according to an embodiment;
Figure 5 illustrates an example of method for manufacturing an elevator guide rail using a plurality of molds;
Figure 6 illustrates an example of method for recharging a 3D-printer during manufacturing an elevator guide rail inside an elevator shaft; and
Figure 7 illustrates an example of an elevator guide rail manufactured according to an embodiment.

### DETAILED DESCRIPTION OF THE INVENTION

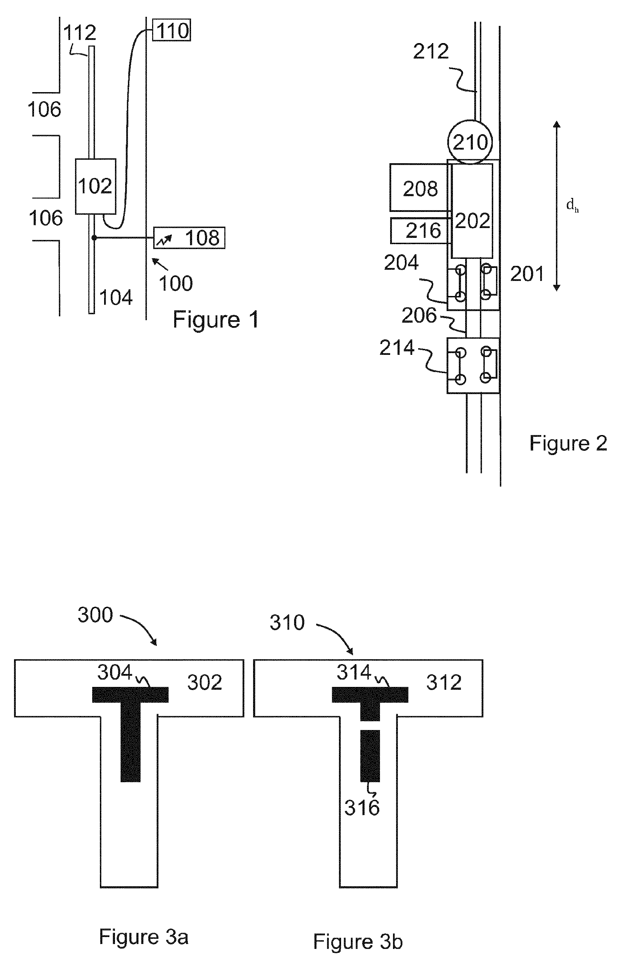

Figure 1 illustrates an elevator arrangement 100, according to an embodiment. An elevator car 102 may be arranged movable between floors 106. The elevator car may be moved along a hoistway 104 that may be determined by a direction, where the elevator car is hoisted. Accordingly, the hoistway may extend in a vertical direction such that the elevator car may be moved from floor to floor by hoisting. The vertical direction may be defined by the direction of gravitation. However, the hoistway may extend also in directions that are at an angle, i.e. inclined, to the vertical direction. These directions may comprise at least a horizontal direction, and a combination of both the horizontal and vertical direction, whereby the elevator car may be moved in both the horizontal and the vertical direction.

Conventionally hoisting may be effected by hoisting machinery that may be connected to the elevator car by ropes. The elevator car may then be moved by reeling the ropes up or down.

One or more elevator guide rails 112 may be installed to the elevator arrangement. The guide rails may be installed to an installation position located in an elevator shaft providing the hoistway for the elevator car. The elevator shaft may comprise an installation base, where the guide rail may be installed. The installation may be for example a wall or other a structure of the building, where the elevator is installed. The guide rails serve at least for supporting the elevator car and/or a counter weight against swaying. The guide rails may also serve for stopping the elevator car in emergency situations.

The elevator may comprise electrical appliances for example one or more of a control panel and lighting that may be powered from an electrical power supply 108. The electrical power supply may be connected to the elevator car by cabling or by a wireless connection for transferring power.

An elevator control unit 110 may be connected to the elevator car for communicating data, voice and/or video with the elevator car. The elevator car may be connected to the elevator control unit by a travelling cable. The elevator control unit may be capable of communicating with a service center, for example for communications between the passengers of the elevator car and the service center. The travelling cable may comprise an electrical feed line for supplying electricity to the electrical appliances in the elevator car.

In an embodiment an electrical power supply 108 may be connected to the guide rail 112 for supplying electricity to the elevator shaft. The elevator car may be connected to the guide rail for transfer of electricity from the guide rail to the elevator car. The connection between the elevator car and the guide rail may be for example a galvanic connection between conductors. The electricity to the elevator car may be used for powering the electrical appliances within the elevator car such as lighting and communications. In this way the electrical feed line may be omitted from the travelling cable and the travelling cable may be made lighter.

In an embodiment the elevator shaft may comprise a connector to an electrical power supply and the guide rail 112 profile may be connected to the connector for supplying electricity to the guide rail from the connector. The guide rail may be connected to the connector during manufacturing of the elevator guide rail by a 3D-printer, for example as described below. The 3D-printer may be caused to print a guide rail comprising an electrical conductor. The electrical conductor that may be printed conductor on the connector to the electrical power supply for feeding electricity form the electrical power supply to the electrical conductor.

An elevator shaft may be a part of a building. A single shaft may have one or more hoistways and corresponding elevator cars. It is also possible that the hoistways of the elevator cars in the shaft are the same. The hoistways may be the same for example, when two elevator cars are connected one upon another and they are hoisted by ropes attached to the upper elevator car.

Figure 2 is an example of a 3D-printer for manufacturing an elevator guide rail 206 according to an embodiment. The 3D printer may refer to a device capable of synthesizing the elevator guide rail from printing material. In 3D printing, successive layers of material may be formed under computer control to create the elevator guide rail. The 3D-printer may be used for manufacturing an elevator guide rail to an installation base 201 in the elevator arrangement of Figure 1. The 3D-printer comprises a printer head device 202 and a mobility unit 204 connected to the printer head device such that the 3D-printer may be moved in a hoisting direction "dₕ" of the elevator car. In this way elevator guide rail printed by the 3D-printer may be left behind the 3D-printer. The mobility unit may be arranged in the 3D-printer behind the printer head for attaching the 3D-printer movable on the printed guide rail profile. The mobility unit may be adapted for ascending and descending on the elevator guide rail. The mobility unit may comprise travelling means for moving on the elevator guide rail and maintaining attachment to the elevator guide rail. The travelling means may comprise one or more wheels or rollers that are adapted to engage the elevator guide profile such that the mobility unit may maintain the attachment to the elevator guide rail. In one example, wheels or rollers are arranged on opposite sides of the elevator guide rail such that they engage the elevator guide rail and the mobility unit may be moved by driving the wheels or rollers by an electrical motor.

In the context of manufacturing the guide rail, a direction or facing of the object may be defined as being forward, when it is in the direction of movement of the 3D-printer. On the other hand, a direction or facing of the object may be defined as being behind, when it is in a direction that is opposite to the direction of movement of the 3D-printer.

The printer head device may comprise one or more printer heads that have a working area, where the printer heads are capable of manufacturing a 3D-object such as a guide rail profile from printing material supplied to the printing heads. The elevator guide rail may be manufactured by the 3D-printer progressing in the hoisting direction and printing the elevator guide rail section by section, where each section is a single elevator guide rail profile.

The 3D-printer may comprise a printing head storage 208 for storing one or more molds and/or portions of molds. The printing head storage and the printing head device may be connected for communicating molds from the printing head storage to a working area of the printing heads in the printing head device and from the working area to the printing head storage. The communications may be implemented by one or more robot arms, for example. The 3D-printer may comprise a plurality of printer heads in the printer head device. In this way time for printing a section of the guide rail may be reduced.

The 3D-printer may comprise a printing material storage 210 for storing printing material to be supplied to the printing head. The printing material storage may be arranged to supply printing material to a printer head in the printing head device by a feed line. The printing material storage may be refilled from a printing material supply 212. The printing material supply may be a line for feeding printing material from a stock of printing material located forward from the 3D-printed in the direction of movement of the 3D-printer. In one example the 3D-printer is moved upwards and the stock of printing material is located above the 3D-printer.

The 3D-printer may be powered by electricity from elevator travelling cable, battery and/or from the printed guide rail.

In an embodiment the 3D-printer may comprise a charging unit 214 movable on the printed guide rail and capable of recharging printing material to the printing material storage and/or electrical energy to a battery. The battery and the printing material storage are co-located with the printing head device for supplying printing material and electrical energy to the printing head device for printing. The charging unit may be adapted for ascending and descending on the elevator guide rail similar to the mobility unit. The charging unit may have a storage unit for electrical energy. Examples of the storage units comprise a battery and an electrical capacitor. The charging unit and the 3D-printer may have connectors for transferring electrical energy from the charging unit to the battery co-located to the printing head device. The connectors may be electrical conductors. For recharging the printing material, the charging g unit may have a storage unit for printing material. The charging unit and the 3D-printer may have connectors for transferring printing material from the charging unit to the printing material storage co-located to the printing head device. Thanks to the charging unit feed lines for electricity and/or printing material may be omitted.

In an embodiment electricity and/or printing material may be charged to the charging unit from a loading station. After the charging unit has charged the 3D-printer, the charging unit may be moved to the loading station to be re-supplied with electricity and/or printing material. The loading station may be located upwards or downwards from the position of the 3D-printer. In one example the loading station may be located in a floor above 3D-printer. In another example the loading station may be located in a floor below the 3D-printer.

In an embodiment, the 3D-printer may comprise a magnetizing unit for binding 3D printing material to a printing surface. The printing material may be metal that is magnetically active, whereby the magnetizing unit may attract the printing material.

In an embodiment, the 3D-printer may comprise a positioning unit 216 capable of defining a position inside the elevator shaft. An example of the positioning unit is a laser scanner. The positioning unit may be attached to the 3D-printer such that the positioning unit may be moved with the 3D-printer. The positioning unit may generate information of the position of the 3D-printer inside the elevator shaft and/or the position of 3D-printer on the guide rail. In one example the positioning unit may generate a position of the 3D-printer on the basis of a starting position of the 3D-pritning of the elevator guide rail. This position may be a distance from the starting position, which correspond to the length of the guide rail printed by the 3D-printer.

Figures 3a and 3b illustrate examples of molds 300, 310 according to embodiments. The molds may be used in a working area of the printer head device in a 3D-printer such that an elevator guide rail having a profile according to the mold may be printed. The elevator guide rail may have an inner profile and an outer profile. Preferably the elevator guide printed by the mold is hollow such that the elevator guide rail is light. However, the inner profile of the mold may be used to print support structures within the elevator guide rail for sufficient rigidity of the resulting elevator guide rail. The profile of the molds have an outer portion 302, 312 and an inner portion 304, 314. The outer portion may define an outer profile of the guide rail and the inner portion may define an inner profile of the guide rail. The inner portion and outer portion are nested such that the guide rail printed using the molds may have the outer profile defined by the outer portion and the inner profile defined by the inner portion. The height of the outer portion may be larger than the height of the inner portion. In one example the height of the outer profile is twice the height of the inner portion. In this way an outer profile of the guide rail may be defined by the outer portion for the height of the outer portion while the inner portion may be changed within the height of the elevator guide rail profile printed using the outer portion.

In an embodiment the inner portion 304, 314 of the molds may be detachable such that it may be changed. For example the inner portion 304 in Figure 3a may be changed to the inner portion 314 of Figure 3b. On the other hand the inner portion may be removed and the mold may be used in the printer head device without the inner portion. In this way the guide rail profile may be formed by the outer portion 302, 312 alone or the outer portion and one or more of the detachable portions. The inner portion may be used only at specific intervals along the elevator guide rail such that an elevator guide rail having a sufficient rigidity may be printed. Thereby, the inner profile of the resulting elevator guide rail may be changed during manufacturing.

In an embodiment, a mold adapted for printing an electrical feed line may comprise nested molds, comprising an inner portion 314, 316 and an outer portion 312. The inner portion may comprise two or more parts 314, 316. The parts of the inner portion may be arranged apart from each other within the outer portion. In this way the guide rail profile printed using the nested molds may have inner portions that are separated from each other for arranging the feed of electricity by the inner portions.

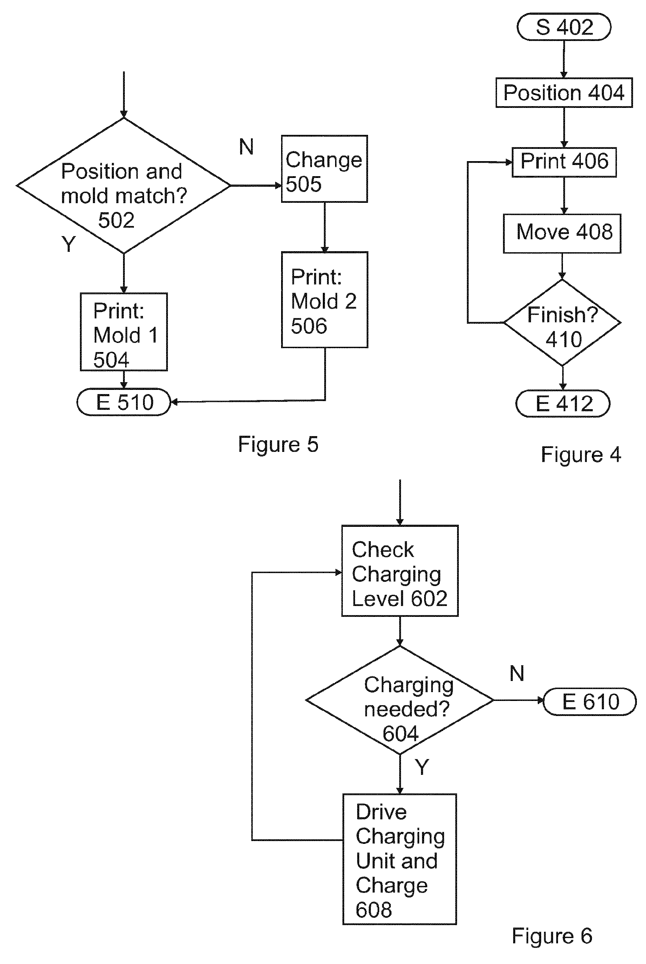

Figure 4 illustrates an example of method for manufacturing an elevator guide rail inside an elevator shaft according to an embodiment. The elevator guide rail me be manufactured to an installation position of the elevator guide rail in an elevator arrangement. The method may start 402, when a 3D-printer is operational and charged with printing material to be supplied to a printing head of the 3D-printer. The 3D-printer may be located inside the elevator shaft, for example at the bottom of the elevator shaft or attached to a guide rail installed to a wall of the elevator shaft. The attachment to the guide rail may be provided by a mobility unit.

The 3D-printer may be positioned 404 inside the elevator shaft such that the 3D-printer is movable in a hoisting direction of the elevator car. In this way the 3D-printer has a starting position for the manufacturing of the guide rail inside the elevator shaft. The positioning may comprise defining a position of the 3D-printer inside the elevator shaft. The position may be defined by a positioning unit capable of generating information indicating the position of the 3D-printer. The information indicating the position may comprise coordinates of the 3D-printer in the elevator shaft. The coordinates may be expressed in a suitable coordinate system, for example in a Cartesian coordinate system spanned in three dimensions by x-, y- and z- axes.

An example of the positioning unit is a laser scanner. The laser scanner attached to the 3D-printer may have measurement directions within the elevator shaft in a work area of the printer head device. In this way the laser scanner may be used to monitor the manufacturing of the guide rail.

The elevator guide rail may be printed to the wall of the elevator shaft:
printing 406 an elevator guide rail profile by the 3D-printer at a current position of the 3D-printer,
moving 408 the 3D-printer to a next position after the elevator guide rail profile is printed at the current position.

The 3D-printer may continue the manufacturing of the elevator guide rail by moving forward to a new position after finishing printing of the elevator guide rail profile to the current position. In this way the guide rail profile may be printed to the new position. Since the elevator guide rail is manufactured within the elevator shaft, logistics in manufacturing the elevator may be simplified since elevator guide rails do not need to be stored between their manufacturing and installation.

It should be appreciated that printing 406 an elevator guide rail profile by the 3D-printer at a current position of the 3D-printer and moving 408 the 3D-printer to a next position after the elevator guide rail profile is printed at the current position may be implemented by separate steps that are executed consecutively, or by the steps may be performed substantially simultaneously.

In an example of printing by the 3D-printer, one or more molds may be used for printing the elevator guide rail profile, whereby the 3D-printer may supply printing material from a printing material storage to the mold via the printing head. Examples of the molds may comprise a mold adapted for printing a guide rail profile comprising an electrical feed line and a mold adapted for printing a bracket for attaching the guide rail to the elevator shaft wall.

In an embodiment, at least one of the molds for printing the guide rail profile may be of magnetically passive material. In this way the mold does not attract the printing material that may be magnetically active. The mold of magnetically passive material is particularly useful in a 3D-printer comprising a magnetizing unit for binding the printing material to the printing surface, whereby the material of the mold does not distract the operation of the magnetizing unit.

In an example of moving the printer, the printer may be attached movable to a printed portion of the elevator guide rail or a pre-installed guide rail. In this way the guide rails may be used for moving the 3D-printer to a next position of the 3D-printer.

In an embodiment, at least one of the molds may be a nested mold. The nested mold may comprise a detachable portion and the detachable portion forms a part of the guide rail profile, for example an inner profile, printed using the mold. Figures 3a and 3b illustrate examples of molds that may have detachable portions.

In an embodiment, the 3D-printer may be positioned to a position in the elevator shaft, where a connector to an electrical power supply is provided and a guide rail profile may be printed on the connector. In this way the 3D-printer may manufacture an elevator guide rail for supplying electricity to the elevator car.

In an embodiment the elevator guide rail profile may be printed by a mold or nested molds. Examples of the molds are illustrated in Figures 3a and 3b.

In an embodiment, a mold adapted for printing an elevator guide rail profile may have a form such that the profile printed using the mold comprises one or more brackets for attaching the guide rail to the elevator shaft. In this way the guide rail may be printed with brackets as needed for sufficient rigidity.

If 410 the guide rail is completed, the method may end 412. Other criteria for finishing the method may comprise, insufficient printing material for printing, re-charging the 3D-printer and/or changing the elevator guide rail profile to be printed. If the guide rail is not finished printing 406 may be continued.

Figure 5 illustrates an example of method for manufacturing an elevator guide rail using a plurality of molds. In the method, at least one mold may be positioned to at least one working area of at least one printer head of the 3D-printer. The manufacturing method may follow the method illustrated in Figure 4. Operation illustrated in Figure 5 may take place, when the 3D-printer is positioned inside an elevator shaft, for example after the step 404 in Figure 4, after printing 406 an elevator guide rail profile, and/or after moving 408 the 3D-printer.

Information indicating a position of the 3D-printer may be obtained from a positioning unit. The molds may comprise molds specific to different portions of the elevator guide rail. In one example, the mods may comprise a mold adapted for printing a bracket for attaching the guide rail to the elevator shaft wall, a mold adapted for printing an electrical feed line. Each mold may have at least one detachable portion that may be changed. In this way a single mold may be used as two molds by changing 505 the detachable portion. Figures 3a and 3b illustrate examples of the molds. The detachable portions in the mold allow that the inner profile of the guide rail may be changed during manufacturing of the guide rail. The inner profile may be printed at specific intervals to have sufficient rigidity to the guide rail.

When 502 the position of the 3D-printer does not match with the current mold of the 3D-printer, the current mold of the 3D-printer may be changed 505 to a specific mold 506 indicated by the position of the 3D-printer. After the mold has been changed, the 3D-printer may print 506 an elevator guide rail profile using the new mold. On the other hand, when the position of the 3D-printer and the current mold match, the 3D-printer may print 504 an elevator guide rail profile using the current mold. In this way the mold according to the position of the 3D-printer may be used for the elevator guide rail, and the method may end 510.

A match or mismatch between the position of the 3D-printer and a mold may be determined on the basis of desired characteristics of the elevator guide rail. In one example the characteristics comprise a strength and/or bracket distance of the elevator guide rail. If printing the elevator guide rail by the current mold would cause the elevator guide rail to not meet the desired characteristics, a mismatch may be determined. On the other hand, if printing the elevator guide rail using the current mold would meet the characteristics, a match may be determined.

In an example the elevator guide rail may be manufactured with a characteristics defining a specific bracket distance for the elevator guide rail. When 502 the position of the 3D-printer less than the specific bracket distance from a previous bracket in the printed elevator guide rail, a mold for the elevator guide rail between bracket positions may be used for printing 504 the elevator guide rail profile. In this way the guide rail profile printed between the bracket positions is without any brackets. However, when 502 the position of the 3D-printer is substantially at a bracket distance from a previous bracket, the current mold of the 3D-printer may be changed 505 to a mold adapted for printing a bracket for attaching the guide rail to the elevator shaft wall and the elevator guide rail profile may be printed 506 including the bracket.

Figure 6 illustrates an example of method for recharging a 3D-printer during manufacturing an elevator guide rail inside an elevator shaft. The manufacturing may follow the method of Figure 4. Operation illustrated in Figure 6 may take place, when the 3D-printer is positioned inside an elevator shaft, for example after the step 404 in Figure 4, after printing 406 an elevator guide rail profile, and/or after moving 408 the 3D-printer. The operation of Figure 6 provides that during manufacturing of the elevator guide rail, the 3D-printer may be recharged with electrical energy and/or printing material. The 3D-printer may comprise a charging unit movable on a guide rail. The charging unit may serve for recharging the 3D-printer by supplying printing material to the printing material storage of the 3D-printer and/or electrical energy to a battery of the 3D-printer. In this way the 3D-printer may be charged during manufacturing of the elevator guide rail by the 3D-printer.

Level of printing material in a printing material storage and/or electrical charge of the battery may be checked 602. In this way information may be obtained of the capability of the 3D-printer to continue printing in terms of sufficiency of the printing material and the electrical energy.

A need 604 to recharge the 3D-printer may be determined on the basis of the obtained level information. The obtained level information may be compared to threshold levels comprising at least one a threshold for the charging level of the battery and a threshold for the level of the printing material in the printing material storage.

If 604 the threshold level is not met the method may end 610 without recharging the 3D-printer. If 604 the threshold level is met, the charging unit may be driven 608 to the 3D-printer for recharging the printing material storage with printing material and/or recharging the battery of the 3D-printer. The charging unit may be charged with printing material and/or electrical energy at a loading station. After the charging unit has been driven to the 3D-printer and recharging the battery and printing material storage, the charging unit may return to the loading station for recharging the charging unit. In this way the charging unit may be prepared for a need to recharge the 3D-printer.

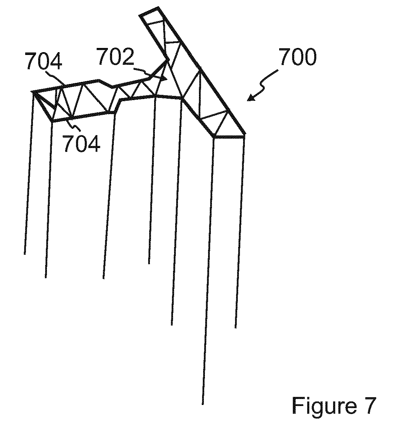

Figure 7 illustrates an example of an elevator guide rail 700 manufactured according to an embodiment. The elevator guide rail comprises an inner profile having support structures 702 that are enclosed within the elevator guide rail. The support structures may be manufactured for example by inner portions in a mold. In the illustration, the support structures are shown in a cross-section of the elevator guide rail in one end of the elevator guide rail. The support structures may extend between opposite sides 704 of the guide rail in an inclined manner. The opposite sides may form portions of the outer surface of the elevator guide rail. In this way the support structure may stiffen the elevator guide rails against straining forces from more than one direction. The inclination between a support structure and a side of the elevator guide rail may be 2D (2 dimensional) inclination, whereby the support structure and the side of the elevator guide rail may form an angle in a 2D-plane spanned by two coordinate axes, for example X-and Y-axes in Cartesian coordinate system. On the other hand, the inclination may be a 3D inclination, whereby the support structure and the side of the elevator guide rail may form an angle in a 3D-plane spanned by three coordinate axes, for example X-, Y- and Z-axes in Cartesian coordinate system. The 3D inclination may facilitate manufacturing elevator guide rails with fewer support structures than the 2D inclination.

An apparatus according to an embodiment may comprise processor; and a memory including computer program code, the memory and the computer program code configured to, with the processor, cause the apparatus at least to perform a method according to an embodiment. The apparatus may be a 3D-printer, or a part of the 3D-printer.

According to an embodiment, an apparatus such as a 3D-printer, or a part of the 3D-printer, for example a data processing unit or a module may comprise processing means configured to carry out an embodiment. The processing means may be formed by at least one processor and a memory. The processing means may be a computer or a part of a computer.

According to an embodiment, an apparatus such as a 3D-printer, or a part of the 3D-printer, may comprise one or more units such as a sensor for determining a level of printing material, a sensor for determining a level of charging of a battery, a positioning unit, a mobility unit, a charging unit, a printer head device, a printing material storage, a printing head storage. The units may be connected to a processing means for communications of information and/or commands between the processing means and the units for causing a method according to an embodiment. The processing means may control the operation of the units by the commands. Information obtained from the units may be processed for obtaining results that may be used for generating commands for controlling the units. Examples of the sensors comprise a weight sensor and a voltage sensor. Connections between the units may be implemented by wired or wireless connections capable of data communications. Examples of the connections comprise computer buses, field buses and network connections such as the Ethernet and IEEE 802.11 based wireless local area network connections.

In an embodiment there is provided a computer program comprising computer program code for execution on a computer to cause a method according to an embodiment, when said product is run on a computer. The computer program may be embodied on a computer -readable storage medium.

In an embodiment there is provided a computer program product for a computer, comprising a computer program according to an embodiment.

An embodiment concerns a computer program embodied on a computer -readable storage medium, the computer program comprising program to execute a process comprising a method according an embodiment.

Embodiments as described may also be carried out in the form of a computer process defined by a computer program. The computer program may be in source code form, object code form, or in some intermediate form, and it may be stored in some sort of carrier, which may be any entity or device capable of carrying the program. For example, the computer program may be stored on a computer -readable storage medium. The computer -readable storage medium may be a computer program distribution medium readable by a computer or a processor. The computer -readable storage medium may be, for example but not limited to, a record medium, computer memory, read-only memory, electrical carrier signal, telecommunications signal, and software distribution package, for example.

The various embodiments may be applied to elevators and elevator arrangements, where people and goods may be transferred by an elevator car. The techniques described herein may be implemented by various means so that an apparatus implementing one or more functions of a mobile communications device described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. A hardware implementation may be through one or more circuits, for example Application Specific Circuits (ASICs). For a firmware or software, implementation can be through modules (e.g., procedures, functions, and so on) that perform the functions described herein. The software codes may be stored in any suitable, processor/computer-readable data storage medium(s) or memory unit(s) or article (s) of manufacture and executed in a cloud computing system or by one or more processors/computers. The data storage medium or the memory unit may be implemented within the processor/computer or external to the processor/computer, in which case it can be communicatively coupled to the processor/computer via various means as is known in the art.

It will be obvious to a person skilled in the art that, as the technology advances, the inventive concept can be implemented in various ways. The invention and its embodiments are not limited to the examples described above but may vary within the scope of the claims.

## Claims

1. A method for manufacturing an elevator guide rail, comprising:
positioning a 3D-printer inside an elevator shaft such that the 3D-printer is movable in a hoisting direction of the elevator car; and
printing an elevator guide rail to a wall of the elevator shaft by:
printing an elevator guide rail profile by the 3D-printer at a current position of the 3D-printer; and
moving the 3D-printer to a next position after the elevator guide rail profile is printed at the current position.

2. A method according to any of the preceding claims, wherein the 3D-printer is powered by electricity from elevator travelling cable, battery and/or from the printed guide rail.

3. A method according to any of the preceding claims, wherein the profile of the guide rail is printed using one or more molds comprising for example a nested mold.

4. A method according to claim 3, wherein at least one of the molds comprises a mold adapted for printing an electrical feed line or a mold adapted for printing a bracket for attaching the guide rail to the elevator shaft wall.

5. A method according to any of the preceding claims, wherein the elevator shaft comprises a connector to an electrical power supply and the guide rail profile is printed on the connector for supplying electricity to the guide rail from the connector.

6. A method according to any of the preceding claims, wherein starting positing of the 3D-printing is defined based on laser measurement of shaft.

7. A method according to any of the preceding claims, wherein the 3D-printer is moved on the printed profile.

8. A 3D-printer for manufacturing an elevator guide rail, comprising means for performing a method according to any one of claims 1 to 7.

9. A 3D-printer according to claim 8, comprising a printing material storage arranged to supply printing material to a printer head, and a charging unit movable on the printed guide rail for supplying printing material to the printing material storage and/or electrical energy to the 3D-printer.

10. A 3D-printer according to claim 8, comprising a mobility unit arranged behind the printer head for attaching the 3D-printer movable on the printed guide rail profile.

11. A 3D-printer according to claim 8, 9, or 10, comprising a magnetizing unit for binding 3D printing material to a printing surface.

12. A 3D-printer according to claim 8, 9, 10, or 11, comprising one or more molds that are of magnetically passive material.

13. A computer program comprising computer program code for execution on a computer to cause a method according any one of claims 1 to 7, when said product is run on a computer.

14. A computer program product for a computer, comprising a computer program according to claim 13.
